# EUROPÄISCHE PATENTANMELDUNG

(11) **EP 4 063 091 A1**
(43) Veröffentlichungstag der Anmeldung: **28.09.2022**
(21) Anmeldenummer: 21165119.5
(22) Anmeldetag: 26.03.2021
(51) Int. Cl.: B29B 7/48, B29B 7/74, B29C 48/375, B29B 7/58, B29B 7/84, B29C 48/57, B29C 48/575, B29C 48/67, B01J 19/00, B01F 7/04

(54) **VORRICHTUNG UND VERFAHREN ZUR WÄRMEBEHANDLUNG VON THERMOPLASTISCHEN KUNSTSTOFFSCHMELZEN**

(71) Anmelder: Starlinger & Co Gesellschaft m.b.H., 1060 Wien (AT)
(72) Erfinder: Fellinger, Markus, 1060 Wien (AT); Bräuer, Gehard, 1060 Wien (AT)
(74) Vertreter: Schwarz & Partner Patentanwälte GmbH

(57) **Zusammenfassung**

Die Vorrichtung (10) zur Behandlung von Schmelzen thermoplastischer Kunststoffe besitzt ein Gehäuse (12), in der eine erste und eine zweite drehbar angetriebene Welle (15, 16) angeordnet sind, wobei auf jeder Welle (15, 16) eine Vielzahl von Mischelementen (17, 19) axial voneinander beabstandet sitzen. Die Mischelemente (17) der ersten Welle (15) sind axial gegen die Mischelemente (19) der zweiten Welle (16) versetzt, sodass sie Zwischenräumen (22) zwischen den Mischelementen (19) der zweiten Welle (16) gegenüberstehen. Die Mischelemente (19) der zweiten Welle (16) sind axial gegen die Mischelemente (17) der ersten Welle (15) versetzt, sodass sie Zwischenräumen (21) zwischen den Mischelementen (17) der ersten Welle (15) gegenüberstehen. Der Abstand (A) der ersten und der zweiten Welle (15, 16) voneinander sowie die größten radialen Längen (R) der Mischelemente (17, 19) sind so dimensioniert, dass die Mischelemente (17, 19) in die ihnen gegenüberstehenden Zwischenräume (22, 21) eingreifen.

## Beschreibung

Die vorliegende Erfindung betrifft eine Vorrichtung zur Wärmebehandlung von thermoplastischen Kunststoffschmelzen gemäß dem Oberbegriff des Anspruchs 1 und ein Verfahren zur Wärmebehandlung von thermoplastischen Kunststoffschmelzen gemäß dem Oberbegriff des Anspruchs 14 oder 17.

Der Erfindung liegt allgemein die Aufgabe zugrunde, eine zuverlässige, kostengünstige, robuste Wärmebehandlungsvorrichtung für thermoplastische Kunststoffschmelzen für verschiedene Anwendungen bereitzustellen, bei denen die zu behandelnde Kunststoffschmelze für eine definierte Verweilzeit mit definierter Temperatur beaufschlagt in der Wärmebehandlungsvorrichtung verweilt.

Es ist bekannt, dass in Kunststoffschmelzen flüchtige Stoffe vorhanden sein können, die im Verlauf einer Wärmebehandlung aus der Schmelze abgegeben werden. Dabei kann es sich um Verunreinigungen, z.B. aus Recyclingprozessen, um Nebenprodukte durch das Aufschmelzen des Kunststoffes, die ursprünglich nicht als Moleküle im Kunststoff vorhanden waren, um Substanzen, die durch die Verwendung vom Füllgut auf den Kunststoff übergehen, oder um Nebenprodukte, die durch eine Reaktion im Kunststoff entstehen, handeln.

Die Erfindung bezieht sich somit im Allgemeinen auf die effiziente Entfernung von flüchtigen Stoffen aus thermoplastischen Kunststoffschmelzen in verschiedenen Anwendungsgebieten.

Ein mögliches Anwendungsgebiet der Erfindung für die Entfernung von flüchtigen Stoffen aus einer thermoplastischen Kunststoffschmelze ist das breite Anwendungsgebiet des Kunststoffrecyclings. Kunststoffe können während ihrer Verwendung durch Fremdstoffe verunreinigt werden, wenn z.B. Produkte in Kunststoffverpackungen gefüllt werden und es vom Füllstoff durch Migration zur Verunreinigung der Verpackung kommt. Ein Beispiel dafür ist die Migration von Toluol, das in Haarshampoo vorhanden ist, in die Verpackung (z.B. PP Hohlkörper) des Haarshampoos. Des Weiteren kann es im Recyclingkreislauf durch missbräuchliche Verwendung der Verpackung nach der Entleerung des ursprünglichen Füllstoffes, wenn jemand z.B. ein Benzin-Schmierölgemisch im Verhältnis 1:25 oder 1:50 in eine Kunststoff-Getränkeflasche füllt, zur Verunreinigung der Verpackung kommen. Um derartig verschmutzte Behältnisse wieder für eine Lebensmittelverpackung verwenden zu dürfen, geben z.B. die Europäische Food Safety Administration (EFSA) und die amerikanische FDA (Food and Drug Administration) grundsätzliche Grenzwerte für Verunreinigungen vor, bei deren Unterschreiten ein bereits beim Konsumenten verwendeter Kunststoff wieder als Lebensmittelverpackung zulässig ist. Es muss sichergestellt sein, dass diese Grenzwerte vom Recyclingbetrieb und von dem eingesetzten Recyclingverfahren in zuverlässiger Weise unterschritten werden.

Des Weiteren kann es im Recycling durch die Hochtemperaturbehandlung des Kunststoffes unter Druck und Temperatur zu Abbauprodukten von verschiedenen chemischen Reaktionen kommen. So kann z.B. bei der Extrusion von PET Acetaldehyd als flüchtiger Stoff entstehen, der wiederum bei längerer Lagerung eines Getränks in einer recycelten PET Flasche zu ungewollten Geschmacksveränderungen des Getränks führen kann. Eine Geruchsreduktion von aromatischen Stoffen in der Kunststoffschmelze ist ebenso möglich (siehe unten).

All diese flüchtigen Stoffe müssen während des Recyclingprozesses auf unter den gesetzlichen Grenzwert reduziert werden.

Ein weiteres Anwendungsgebiet der Erfindung ist die Reduktion von z.B. aromatischen Stoffen aus der Kunststoffschmelze, die entweder durch die initiale Zugabe dieser Stoffe im Herstellungsprozess in Form von Additiven in den Kunststoff gelangen, oder durch chemische Reaktion verschiedenster Stoffe während des Herstellungsprozesses oder als Abbauprodukte des Kunststoffes entstehen. Diese Stoffe werden während des Gebrauchs des Kunststoffes abgegeben und stellen für manche Menschen eine Geruchsbelästigung dar bzw. sind im allerschlimmsten Fall toxisch. Es ist daher wünschenswert, solche aromatischen Stoffe bereits im Herstellungsprozess auf ein absolut notwendiges Minimum zu reduzieren. Als ein Beispiel dafür ist der Geruch eines Neuwagens zu nennen.

Auch die Melt polycondensation von Polykondensaten, wie z.B. PET, PC oder PA, stellt ein mögliches Anwendungsgebiet der vorliegenden Erfindung dar. Bei der Polykondensation von PET werden unter hoher Temperatur in der Schmelzephase von PET hauptsächlich Ethylenglycol und Wasser bei der Verbindung von zwei Molekülketten zu einem längeren Molekül abgespalten. Diese Abspaltprodukte müssen zuverlässig und rasch aus der Polykondensatschmelze entfernt werden, um die Viskosität der Polykondensatschmelze zu erhöhen.

Die vorliegende Erfindung ist auch für eine Kombination der genannten drei Anwendungsgebiete einsetzbar. So ist es z.B. möglich recyceltes PET aus Flaschen oder Folienabfällen mittels der Erfindung zu dekontaminieren und somit von Fremdstoffen zu reinigen, im selben Arbeitsschritt die Viskosität der Schmelze mittels Melt phase polycondensation zu erhöhen und gleichzeitig etwaige aromatische Stoffe zu entfernen.

In einem Aspekt bezieht sich die Erfindung auf eine Vorrichtung zur Behandlung von Schmelzen thermoplastischer Kunststoffe, in der Kunststoffschmelze kontinuierlich vom Einlass zum Auslass transportiert wird und optional unter Anlegung eines Unterdrucks gleichzeitig entgast und somit von flüchtigen Stoffen gereinigt wird.

Solche Vorrichtungen sind zum Beispiel aus der DE 10 2018 216 250 A1 oder der AT 516967 A1 bekannt.

In beiden bekannten Vorrichtungen wird die Polykondensationsschmelze mittels in einem Gehäuse drehbar gelagerten Scheiben oder Mischelementen vom Einlass zum Auslass hin befördert und durch das Eintauchen der Mischelemente eine Oberfläche geschaffen, an der sich die Schmelze temporär anlegt. Beide Vorrichtungen funktionieren umso zuverlässiger, je dünnflüssiger die Schmelze ist. Wenn jedoch mit zunehmendem Polykondensationsgrad der Schmelze die Zähigkeit der Schmelze steigt, kommt es zum Ankleben der Kunststoffschmelze an den Mischelementen, wodurch eine konstante Verweilzeit der Schmelze im Reaktor nicht mehr gewährleistet ist, da konstruktionsbedingt keine Zwangsförderung der Polykondensationsschmelze vorhanden ist. Schlimmstenfalls kann es bei sehr langem Ankleben der Kunststoffschmelze an den Mischelementen von mehreren Stunden zu Verkokungen kommen. Diese Verkokungen führen nach ihrem Loslösen von den Mischelementen zu einem unbrauchbaren Produkt.

Des Weiteren sind Doppelschneckenextruder bzw. Kneter bekannt, in denen zwei Extrusionsschnecken ineinander kämmend gleichsinnig oder gegensinnig laufen und sich somit gegenseitig abscheren und ein dadurch Ankleben von Schmelze unmöglich machen. Allerdings erfordern solche Extruder eine sehr präzise Fertigung der Schneckenelemente und sind für die vorgesehenen Anwendungsgebiete der Erfindung schon alleine wegen der erfindungsgemäß angestrebten relativ langen Verweilzeiten der Schmelze im Reaktionsraum und den damit verbundenen Fertigungskosten nicht ökonomisch einsetzbar. Ein solcher Doppelschneckenextruder ist aus der WO 2018/215028 A1 bekannt.

Darüber hinaus sind aus der WO 03033240 A1 und der WO 2020/099684 A1 Multischnecken Reaktionsextruder bekannt, die allerdings durch ihre Bauweise für die erfindungsgemäß angestrebten Verweilzeiten nicht ökonomisch einsetzbar sind.

Bei der in der oben genannten DE 102018216250 A1 offenbarten Wärmebehandlungsvorrichtung für Kunststoffschmelzen handelt es sich um einen Scheibenreaktor, bei dem mehrere, in axialer Richtung versetzte, auf einer Antriebswelle aufgesetzte Scheiben in einem zylindrischen Rohr rotieren. Der Füllstand des Rohres mit Kunststoffschmelze ist in diesem Falle mit maximal der Hälfte des Volumens begrenzt. Durch die in die Kunststoffschmelze eintauchenden und rotierenden Scheiben wird ein Teil der Kunststoffschmelze mit den Scheiben nach oben gezogen und im schmelzefreien Raum an der Oberfläche einem Unterdruck ausgesetzt. Dadurch migrieren flüchtige Bestandteile der Kunststoffschmelze, wie z.B. bei PET im wesentlichen Ethylenglycol oder Wasser in der Form von Wasserdampf, aus der Kunststoffschmelze heraus und werden durch den an der Öffnung herrschenden Unterdruck abtransportiert. In der zu verarbeitenden Kunststoffschmelze können jedoch auch andere ungewünschte flüchtige Bestandteile enthalten sein, wie z.B. Aromate oder sonstige Chemikalien, die entweder beim Herstellen des Kunststoffes oder beim Aufschmelzen als Reaktionsprodukte durch Temperatur und/oder Druck der verschiedenen Kunststoffbestandteile entstehen, oder die als Verunreinigungen während der Verwendung eines Kunststoffproduktes oder während der Reinigung von Kunststoffabfällen in den Kunststoff vor dem Wiederaufschmelzen migrieren, z.B. Reinigungsmittel oder Waschadditive. Solche Verunreinigungen stellen speziell bei der Verwendung von Recyclingkunststoffen durch Geruchsbelastung bzw. toxische Belastung, z.B. in Lebensmittelverpackungen, ein ungewolltes Übel dar.

Die Nachteile von konventionellen Schmelzephasen- bzw. Scheibenreaktoren in einem zylindrischen Rohr liegen speziell darin, dass die Verwendung solcher Reaktoren auf "dünnflüssige" Kunststoffschmelzen begrenzt ist. Das liegt daran, dass es nur durch das Eintauchen der Scheiben in das Kunststoffbad zu einer Erneuerung der Oberfläche kommt, wogegen zähviskose Schmelzen an den Scheiben ankleben und es somit zu undefinierten Verweilzeiten der Kunststoffschmelze im Reaktor bis hin zu sogenannten Verkokungen der Kunststoffschmelze kommen kann. Das stellt z.B. bei der Verarbeitung von PET ein großes Problem dar, wo solche Reaktoren als Melt Phase Polycondensationsreaktoren eingesetzt werden und die Kunststoffschmelze beim Eintritt bei einer intrinsischen Viskosität nach ASTM D445, DIN EN ISO 1628-5 von 0,2 - 0,65 dl/g liegt und im kommerziellen Anwendungsbereich bei einer Austrittsviskosität von ca. 0,75-0,8 dl/g begrenzt ist. Bei höherviskosen Kunststoffen und bei PET >0,8 dl/g verkleben die Scheiben, wodurch neben den nach einiger Zeit auftretenden Verkokungen auch die Oberfläche der Kunststoffschmelze und somit einer der ausschlaggebenden Faktoren für die Migration der flüchtigen Bestandteile aus der Schmelze reduziert wird. Ein weiteres Problem bei diesen Schmelzereaktoren stellen Toträume zwischen den Scheiben oder im Eintrags- und Austragsbereich dar, wo es wiederum zu undefinierten Verweilzeiten und Materialschädigungen der Schmelze kommen kann. Zusätzlich zu oben beschrieben Nachteilen ist auch ein Leerfahren eines solchen Reaktors bei zähen Schmelzen nur sehr unbefriedigend möglich, da das kontinuierliche Abreinigen der Scheiben durch frische Schmelze dabei entfällt. Um die Probleme beim Leerfahren des Reaktors zu umgehen, wurden Vorrichtungen gemäß dem Stand der Technik für chargenweise Polykondensation von Polymeren konzipiert, wie in der WO 2008/043548 A1 vorgeschlagen. Aber auch dieser Lösungsansatz ist bei zähviskosen Schmelzen nicht erfolgreich. Er schafft andererseits sogar zusätzliche Probleme beim Anfahren mit einer frischen Schmelzecharge, um diese im Reaktor auf eine gleichmäßige Temperatur zu bringen. Zur Behandlung hochviskoser Kunststoffschmelzen in einem Reaktor wurde in der WO 2006/050799 vorgeschlagen, in einem zylinderförmigen Behälter im Bereich des Schmelzesumpfes mittels Trennwänden Kammern zu bilden, in denen als Rührelemente dienende, über Speichen an einer Welle befestigte Ringscheiben rotieren, wobei in den Zwischenräumen der Ringscheiben einander gegenüberliegende, stationär mit der Innenseite des Behälters verbundene Abstreifer angeordnet sind. Ähnliche Konzepte mit rotierenden Scheiben und dazwischen angeordneten stationären Abstreifelementen sind auch aus der oben erwähnten DE 10 2018 216 250 A1 sowie der WO 2007/140926 A1 und der EP 0 320 586 B1 bekannt. Diese Vorrichtungen können zwar das Problem der Verkokung von an den Scheiben anhaftender Kunststoffschmelze lösen, können aber keine definierte Verweilzeit hochviskoser Kunststoffschmelze garantieren und weisen auch den Nachteil geringer Leistungsfähigkeit wegen unzureichender, sich an den Scheiben bildenden Oberflächen der hochviskosen Kunststoffschmelze auf.

Die vorliegende Erfindung hat es sich zur Aufgabe gemacht, die oben beschriebenen Nachteile der Einwellen-Scheibenreaktoren zu verbessern und eine kostengünstige und zuverlässigere Vorrichtung zum Dekontaminieren von neuen und Recycling-Kunststoffen, wie HDPE, LDPE, LLDPE, PP, PS, PA, und PET, unter anderen mit MFI-Werten in der Schmelze von 0,1 g/10min bei HDPE bis zu 1000 g/10min bei PP nach DIN EN ISO 1133 (MFI Messung) bzw. zur Dekontamination und Polykondensation von Polykondensaten wie PA, PEN oder PET, bei intrinsischen Viskositätswerten der Schmelze beim Eintritt in den Wärmebehandlungsreaktor von 0,2- 0,75 dl/g und intrinsischen Viskositätswerten der Schmelze beim Austritt aus dem Wärmebehandlungsreaktor von 0,6 - 1,2 dl/g bereitzustellen. Weiters schlägt die Erfindung ein Verfahren zur Wärmebehandlung von thermoplastischen Kunststoffschmelzen vor, mit dem die Probleme des eingangs genannten Standes der Technik überwunden werden können.

Die vorliegende Erfindung löst die gestellte Aufgabe durch eine Vorrichtung zur Behandlung von Schmelzen thermoplastischer Kunststoffe mit den Merkmalen des Anspruchs 1 und durch ein Verfahren zur Behandlung von Schmelzen thermoplastischer Kunststoffe mit den Merkmalen des Anspruchs 14 und des Anspruchs 17. Vorteilhafte Ausgestaltungen der Erfindung sind in den Unteransprüchen sowie der nachfolgenden Beschreibung und den Zeichnungen dargelegt.

Die erfindungsgemäße Vorrichtung zur Behandlung von Schmelzen thermoplastischer Kunststoffe weist ein Gehäuse mit einer Schmelzeeintrittsöffnung, einer Schmelzeaustrittsöffnung und einer Abzugsöffnung für flüchtige Bestandteile der Kunststoffschmelze auf. Diese Vorrichtung umfasst zumindest eine erste drehbar angetriebene Welle und eine zweite drehbar angetriebene Welle, wobei auf jeder Welle eine Vielzahl von Mischelementen axial voneinander beabstandet sich mit der Welle drehend angeordnet sind. Die Mischelemente der ersten Welle sind axial so gegen die Mischelemente der zweiten Welle versetzt, dass die Mischelemente der ersten Welle Zwischenräumen, die zwischen den voneinander axial beabstandeten Mischelementen der zweiten Welle gebildet sind, gegenüberstehen. Die Mischelemente der zweiten Welle sind axial so gegen die Mischelemente der ersten Welle versetzt, dass die Mischelemente der zweiten Welle Zwischenräumen, die zwischen den voneinander axial beabstandeten Mischelementen der ersten Welle gebildet sind, gegenüberstehen, wobei der Abstand der ersten und der zweiten Welle voneinander sowie die größten radialen Längen der Mischelemente so dimensioniert sind, dass die Mischelemente in die ihnen gegenüberliegenden Zwischenräume eingreifen.

Durch diese Ausbildung der Vorrichtung zur Behandlung von Schmelzen thermoplastischer Kunststoffe wird einerseits sichergestellt, dass die thermoplastischen Kunststoffe auf den Mischelementen eine große Oberfläche bilden können und daher der Austrag unerwünschter Stoffe aus der Kunststoffschmelze zügig vonstattengehen kann. Andererseits wird auch zuverlässig verhindert, dass es zu unkontrolliert langen Verweilzeiten der Kunststoffschmelzen an den Mischelementen und damit zu undefinierten Viskositätserhöhungen oder gar zu Verkokungen der an den Mischelementen anhaftenden Kunststoffschmelze kommt.

In einer bevorzugten Ausführungsform der erfindungsgemäßen Vorrichtung sind die axialen Dicken der Mischelemente so dimensioniert, dass sie beim Eingriff in die Zwischenräume mit den die Zwischenräume definierenden Mischelementen einen Spalt zwischen 0,5 und 5 mm bilden. Dadurch wird ein verlässliches Abscheren der Kunststoffschmelze von den Oberflächen der Mischelemente erzielt, ohne dass übermäßig hohe Anforderungen an die Fertigungsgenauigkeit und damit an die Herstellkosten der erfindungsgemäßen Vorrichtung gestellt werden.

Um den Zwischenraum zwischen den Mischelementen zu bilden, ist in einer Ausführungsform der Erfindung vorgesehen, dass die axialen Abstände der Mischelemente durch Anordnung von Abstandshaltern zwischen den Mischelementen definiert sind, wobei die Abstandshalter eine kleinere radiale Ausdehnung haben als die Mischelemente. Die Abstandshalter können als auf die jeweilige Welle aufschiebbare Scheiben ausgebildet sein, die vorzugsweise austauschbar sind.

Zur weiteren Verbesserung des Abscherens von Kunststoffschmelze von den Mischelementen ist bei einer Ausführungsform der erfindungsgemäßen Vorrichtung vorgesehen, dass die größten radialen Längen der Mischelemente so bemessen sind, dass sie beim Eingriff in die Zwischenräume einen Abstand von 0,5 bis 5 mm zur Manteloberfläche der ihnen gegenüberliegenden Welle oder zur Manteloberfläche von gegebenenfalls auf der gegenüberliegenden Welle angeordneten Abstandshaltern aufweisen.

Eine konstruktiv einfache Ausführung der erfindungsgemäßen Vorrichtung ergibt sich, wenn die erste und die zweite Welle parallel zueinander ausgerichtet sind.

Es hat sich gezeigt, dass die Verweildauer der Kunststoffschmelze und das Austragen von unerwünschten Stoffen aus der Kunststoffschmelze besonders gut geregelt werden können, wenn die Mischelemente als Flügelelemente mit zumindest zwei Flügeln oder als Scheiben ausgebildet sind.

Zur Erzielung einer Transportwirkung der Kunststoffschmelze hin zur Schmelzeaustrittsöffnung ist es bevorzugt, wenn die Mischelemente an ihren Umfängen mit Anfasungen versehen sind. Es handelt sich bei dieser Maßnahme zwar um keine echte Zwangsförderung, allerdings ist die Wirkung der Anfasungen mit einer Zwangsförderung der Kunststoffschmelze vergleichbar.

Um eine große Variabilität der erfindungsgemäßen Vorrichtung je nach zu behandelnder Kunststoffart und Anwendungsgebiet zu erzielen, können erfindungsgemäß die erste und die zweite Welle mit unterschiedlichen Geschwindigkeiten gleichsinnig oder gegensinnig drehbar ausgeführt sein, wobei ergänzend oder alternativ dazu die erste und/oder die zweite Welle in ihrer Drehrichtung umschaltbar sind/ist.

In einer bevorzugten Ausführungsform der erfindungsgemäßen Vorrichtung ist/sind die erste oder/und die zweite Welle axial verschiebbar, wobei vorzugsweise die Verschiebung pulsierend erfolgt. Eine gemeinsame axiale Verschiebung der ersten und der zweiten Welle dient dazu, um die stirnseitigen Innenwände des Gehäuses abzuschaben. Eine geringe axiale Verschiebung einer der beiden Welle bzw. eine gegengleiche Verschiebung der beiden Wellen in Bezug aufeinander dient dazu, um die Spaltbreiten in den Zwischenräumen zu verändern.

Für die Unterstützung des Schmelzetransports zur Schmelzeaustrittsöffnung des Gehäuses kann erfindungsgemäß vorgesehen sein, dass im Bodenbereich im Inneren des Gehäuses der Vorrichtung eine Förderschnecke zwischen den Mischelementen der ersten Welle und den Mischelementen der zweiten Welle ausgebildet ist.

In einer weiteren Ausführungsform der erfindungsgemäßen Vorrichtung ist das Gehäuse und/oder zumindest eine der Wellen temperierbar, d.h. heizbar bzw. kühlbar, um jeweils die optimalen Temperaturen für die Behandlung der Kunststoffschmelze im Inneren der Vorrichtung sicherzustellen. Die Heizung kann durch in oder um die Wände des Gehäuses und/oder in die Wellen eingebaute elektrische Heizelemente oder Temperiermediumleitungen realisiert werden, die Kühlung kann durch die genannten Temperiermediumleitungen realisiert werden.

Das erfindungsgemäß Verfahren zur Wärmebehandlung, vorzugsweise zur Dekontaminierung, von Schmelzen von thermoplastischen Kunststoffen in einer Wärmebehandlungsvorrichtung mit einem Gehäuse mit einer Schmelzeeintrittsöffnung, einer Schmelzeaustrittsöffnung und einer mit einem Vakuum verbindbaren Abzugsöffnung für flüchtige Bestandteile der Kunststoffschmelze, ist gekennzeichnet durch Verweilenlassen der Schmelze in der Wärmebehandlungsvorrichtung für eine Wärmebehandlungszeit von 1-120 min bei einer Wärmebehandlungstemperatur über der Schmelzetemperatur des zu behandelnden Kunststoffs und optional einem Vakuum zwischen 0,1 und 900 mbar, vorzugsweise zwischen 1 und 10 mbar. Es wäre auch denkbar die Wärmebehandlungseinrichtung mittels Luft oder eines Gases zu spülen und somit flüchtige Bestandteile aus dem Behälter zu transportieren. Des weiteren wäre es denkbar, den Wärmebehandlungsbehälter unter Überdruck zu setzen (z.B. mittels eines Inertgases wie Stickstoff oder CO2) und somit die Kunststoffschmelze zur Bläschenbildung anzuregen (Schäumen) bzw. die Kunststoffschmelze mit Gas zu vermengen und den Kunststoff nach seiner Abkühlung mittels Wiedererwärmung zur Expansion zu zwingen.

Zur Durchführung dieses Verfahrens kann die oben erläuterte erfindungsgemäße Vorrichtung zur Behandlung von Schmelzen von thermoplastischen Kunststoffen verwendet werden.

Die Erfindung wird nachfolgend anhand von Ausführungsbeispielen unter Bezugnahme auf die Zeichnungen näher erläutert.
Fig. 1 zeigt schematisch eine Anlage zur Aufbereitung von thermoplastischen Kunststoffschmelzen mit einer erfindungsgemäßen Vorrichtung zur Behandlung von Schmelzen thermoplastischer Kunststoffe.
Fig. 2 zeigt eine erste Ausführungsform der erfindungsgemäßen Vorrichtung zur Behandlung von Schmelzen thermoplastischer Kunststoffe schematisch in Seitenansicht.
Fig. 3 zeigt die erste Ausführungsform der erfindungsgemäßen Vorrichtung zur Behandlung von Schmelzen thermoplastischer Kunststoffe schematisch in Draufsicht.
Fig. 4 zeigt ein Detail einer Variante der erfindungsgemäßen Vorrichtung zur Behandlung von Schmelzen thermoplastischer Kunststoffe.
Fig. 5 zeigt ein weiteres Detail der erfindungsgemäßen Vorrichtung zur Behandlung von Schmelzen thermoplastischer Kunststoffe.
Figuren 6A bis 6D zeigen verschiedene Ausführungsformen der in der erfindungsgemäßen Vorrichtung verwendeten Mischelemente.
Figuren 7A bis 7C zeigen verschiedene Querschnittsformen der in der erfindungsgemäßen Vorrichtung verwendeten Wellen.
Figuren 8A, 8B, 8C zeigen eine Anordnung der als Flügel ausgebildeten Mischelemente auf der Welle 15, 16 in Form einer Schraubenlinie in Seitenansicht, Vorderansicht und in der Perspektive.
Fig. 9 zeigt eine zweite Ausführungsform der erfindungsgemäßen Vorrichtung zur Behandlung von Schmelzen thermoplastischer Kunststoffe in einer Querschnittsansicht.
Fig. 10 zeigt die zweite Ausführungsform der erfindungsgemäßen Vorrichtung zur Behandlung von Schmelzen thermoplastischer Kunststoffe in einer Längsschnittansicht.
Fig. 11 zeigt eine Doppelschnecke zur Verwendung in der zweiten Ausführungsform der erfindungsgemäßen Vorrichtung zur Behandlung von Schmelzen thermoplastischer Kunststoffe.

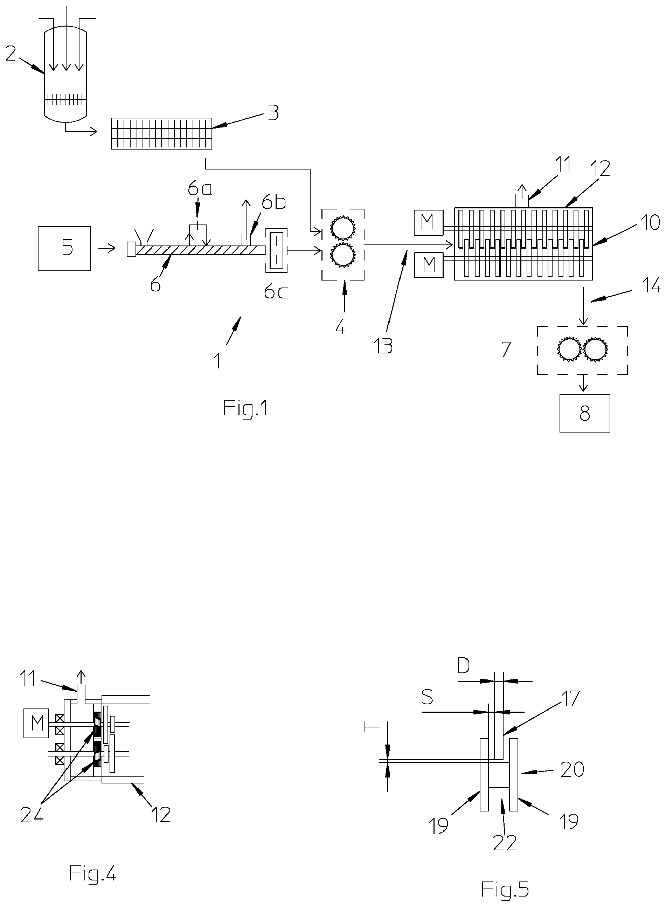

Anhand von Fig. 1 wird zunächst eine Anlage zur Aufbereitung von thermoplastischer Kunststoffschmelze erläutert, in der die erfindungsgemäße Vorrichtung 10 zur Behandlung von Schmelzen thermoplastischer Kunststoffe Verwendung findet und in der das erfindungsgemäße Verfahren zur Wärmebehandlung, vorzugsweise Dekontaminierung, von Schmelzen von thermoplastischen Kunststoffen durchgeführt wird.

Diese beispielhafte Anlage 1 ist sowohl zur Verwendung von neuem Kunststoffmaterial, als auch zur Aufbereitung von Kunststoffabfällen, insbesondere Post-Consumer Kunststoffabfällen, als auch zur gemeinsamen Aufbereitung von neuem Kunststoffmaterial und Kunststoffabfällen geeignet. Einige der beschriebenen Anlagenteile sind optional, andere Anlagenteile können durch andere Vorrichtungen ersetzt werden.

Die Anlage 1 zur Aufbereitung von Kunststoffmaterial umfasst in einem ersten Anlagenzweig einen Kunststoffherstellungsreaktor 2, dem Kunststoff-Rohmaterial und Additive zugeführt werden, die im Kunststoffherstellungsreaktor 2 miteinander vermischt werden. Das Ausgangsprodukt an Kunststoffmaterial kann dabei in der Form von Rohmaterialien wie bei PET aus PTA, EG und Katalysatoren wie Animon vorliegen. Das Gemisch aus Kunststoff-Rohmaterial und Additiven wird einem Schmelzephasenreaktor 3 zugeführt, in dem es homogenisiert und z.B. bei PET polykondensiert wird. Die solcherart homogenisierte Kunststoffschmelze wird einem ersten Eingang einer Schmelzepumpe 4 zugeführt.

Die Anlage 1 zur Aufbereitung von Kunststoffmaterial umfasst auch einen zweiten Zweig, der für die Aufbereitung von Kunststoffabfällen ausgelegt ist. Dieser zweite Zweig umfasst eine schematisch dargestellte Vorbehandlungseinrichtung 5, in der die Kunststoffabfälle für die weitere Verarbeitung vorbereitet werden. Die in der Vorbehandlungseinrichtung durchgeführten Schritte umfassen beispielsweise das Waschen, das Intensivreinigen, das Vortrocknen und das Zerkleinern der thermoplastischen Kunststoffabfälle. Nach erfolgter Vorbehandlung wird mit den Kunststoffabfällen ein Extruder 6 beschickt, in dem die Kunststoffabfälle aufgeschmolzen werden. Beim Extruder 6 kann es sich um einen Einschneckenextruder, einen Doppelschneckenextruder mit gleich- oder gegenlaufenden Schnecken, oder einen konischen Doppelschneckenextruder oder Mehrschneckenextruder handeln. Der Extruder 6 kann mit einer ersten Filtereinrichtung 6a versehen sein, in der Fremdteilchen aus der Kunststoffschmelze ausgefiltert werden. Der Extruder 6 kann mit einer Entgasungseinrichtung 6b ausgestattet sein, die eine Öffnung zur Ableitung von flüchtigen Bestandteilen aus der Kunststoffschmelze umfasst. Dabei wird die Kunststoffschmelze zuerst in einen im wesentlichen drucklosen Zustand versetzt, und es werden, optional mittels eines Unterdruckerzeugers, flüchtige Bestandteile der Kunststoffschmelze, wie Monomere, Wasser oder - im Falle von PET - Ethylenglycol abgesaugt. Optional ist am Ausgang des Extruders 6 eine zweite Filtereinrichtung 6c angeordnet, die allfällige, noch in der Kunststoffschmelze enthaltene Fremdteilchen ausfiltert. Die zweite Filtereinrichtung 6c kann auch anstelle der ersten Filtereinrichtung 6a vorgesehen werden. Bei diesen Filtereinrichtungen sind sämtliche handelsübliche Einrichtungen geeignet, wie z.B. kontinuierliche oder diskontinuierliche Maschendrahtgewebefilter mit oder ohne Rückspüleinrichtung. Vom Ausgang des Extruders 6 bzw. der zweiten Filtereinrichtung 6c wird die solcherart homogenisierte, gereinigte und gefilterte Schmelze aus Kunststoffabfällen einem zweiten Eingang der Schmelzepumpe 4 zugeführt. Die Schmelzepumpe 4 bildet eine Zwangsförderung für die Kunststoffschmelzen durch Druckerzeugung. Die Schmelzepumpe 4 stellt auch eine Mischeinrichtung für die Kunststoffschmelzeströme dar, falls beide Zweige der Anlage 1 mit Kunststoffmaterial bzw. Kunststoffabfällen beschickt werden. Es kann auch am Ende eines jeden Zweigs jeweils eine eigene Schmelzepumpe vorgesehen werden und die Kunststoffschmelzeströme nach den Ausgängen der Schmelzepumpe dann einem Mischer zugeführt werden. Wie im Stand der Technik bekannt, kann die Schmelzepumpe 4 als Zahnradpumpe ausgeführt sein. Alternativ kann auch eine Verlängerung der Extruderschnecke zur Druckerzeugung verwendet werden. Soweit bisher beschrieben, enthält die Anlage 1 Vorrichtungen, die dem Fachmann auf dem Gebiet wohlbekannt sind und daher keiner genaueren Erörterung bedürfen.

Von der Schmelzepumpe 4 wird die Kunststoffschmelze, optional unter Zwischenschaltung einer Schmelzefiltereinrichtung, einer Schmelzeeintrittsöffnung 13 der erfindungsgemäßen Vorrichtung 10 zur Behandlung von Schmelzen thermoplastischer Kunststoffe zugeführt, die weiter unten im Detail beschrieben wird. Die in der Vorrichtung 10 zur Behandlung von Schmelzen thermoplastischer Kunststoffe anfallenden flüchtigen Bestandteile der Kunststoffschmelze werden über eine Abzugsöffnung 11 aus der Vorrichtung 10 abgeführt. Nach erfolgter Wärmebehandlung der Kunststoffschmelze in der Vorrichtung 10 zur Behandlung von Schmelzen thermoplastischer Kunststoffe wird die Kunststoffschmelze von einer Schmelzeaustrittsöffnung 14 der Vorrichtung 10 zu einer Austragseinrichtung 7 geführt, bei der es sich beispielsweise um eine Zahnradpumpe handeln kann. Von der Austragseinrichtung 7 gelangt die Kunststoffschmelze in eine schematisch dargestellte Nachbehandlungseinrichtung 8. Diese Nachbehandlungseinrichtung 8 kann unterschiedliche Stationen umfassen, z.B. Formgebungsvorrichtungen, wie z.B. eine Granuliereinrichtung, eine Profilextrusionseinrichtung, eine Spritzgussmaschine, Rund- oder Breitschlitzdüsen zur Herstellung von Platten und Folien, etc.. In der Nachbehandlungseinrichtung 8 können weitere Verfahrensschritte, wie Additivierung der Kunststoffschmelze, z.B. mit Farben, oder Mischeinrichtungen ausgeführt werden. Die Nachbehandlung ist nicht Teil der Erfindung.

Zusätzlich oder alternativ zu den beschriebenen Aufbereitungen von Kunststoffen bzw. Kunststoffabfällen und ihrer Zuführung zur erfindungsgemäßen Vorrichtung 10 zur Behandlung von Schmelzen thermoplastischer Kunststoffe kann die in der erfindungsgemäßen Vorrichtung 10 zu behandelnde Kunststoffschmelze der Vorrichtung 10 auch direkt aus einem Reaktor zur Herstellung von Neukunststoffen entnommen und in der Vorrichtung 10 weiterbehandelt werden. Die erfindungsgemäße Vorrichtung 10 zur Behandlung von Schmelzen thermoplastischer Kunststoffe kann auch vor oder nach einem Schmelzephasenreaktor zur Vor-oder Weiterbehandlung der Kunststoffschmelze platziert werden.

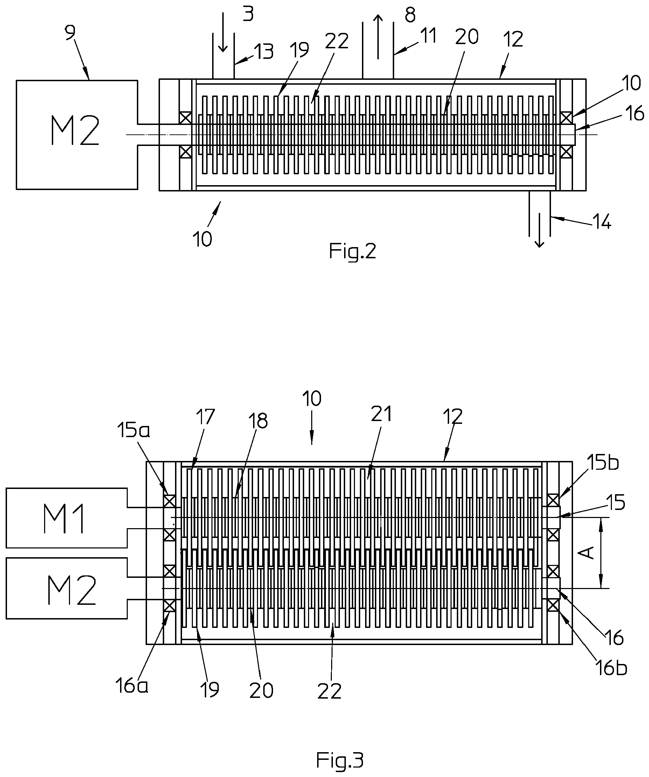

Anhand von Fig. 2 und Fig. 3 wird nun eine erste Ausführungsform einer erfindungsgemäßen Vorrichtung 10 zur Behandlung von Schmelzen thermoplastischer Kunststoffe näher erläutert. Diese Vorrichtung 10 weist ein Gehäuse 12 mit einer Schmelzeeintrittsöffnung 13, einer Schmelzeaustrittsöffnung 14 und einer Abzugsöffnung 11 für flüchtige Bestandteile der Kunststoffschmelze auf. Die Abzugsöffnung 11 für flüchtige Stoffe könnte auch an der Einlassseite des Gehäuses 12, wie in Fig. 4 dargestellt, und/oder an dessen Auslassseite angeordnet sein. Im Gehäuse 12 ist eine erste, durch einen ersten Elektromotor M1 drehbar angetriebene Welle 15 und eine zweite, durch einen zweiten Elektromotor M2 drehbar angetriebene Welle 16 angeordnet. Auf jeder der beiden Wellen 15, 16 sind mehrere Mischelemente 17, 19 axial voneinander beabstandet sich mit der Welle 15, 16 drehend angeordnet. Die beiden Wellen 15, 16 sind mit ihren jeweiligen Antriebsmotoren M1, M2 über lösbare Verbindungen, wie z.B. Kupplungen oder Verzahnungen zur Übertragung des Drehmoments verbunden. Die Wellen 15, 16 verfügen über Lagerungen 15a, 15b bzw. 16a, 16b, die gegebenenfalls je nach Anwendungsfall über Wellendichtringe, Rückfördergewinde, Stopfbuchsen zum Schutz vor Eindringen von Kunststoffschmelze oder Staub und/oder Vakuum abgedichtet und geschützt werden (nicht dargestellt). Die Mischelemente 17, 19 werden in ihrer umhüllenden Form von dem Gehäuse 12 ummantelt. Das Gehäuse 12 ist so ausgeführt, dass sich zwischen der Innenwand des Gehäuses 12 und den umhüllenden Formen der Mischelemente 17, 19 ein Spalt zwischen 0,5 und 5 mm bildet. Die Wellen 15, 16 werden von den jeweiligen Elektromotoren M1, M2 und gegebenenfalls zwischengeschalteten Getrieben mit einer Drehzahl zwischen 1 U/min bis 50 U/min angetrieben. Denkbar ist auch eine Ausführung mittels einem Antriebsmotor M (siehe Fig. 4) und einem Getriebe mit zwei Abtrieben (nicht dargestellt) für die Wellen 15, 16. Die Mischelemente 17, 19, die im Anfangs- und im Endbereich auf den Wellen 15, 16 sitzen, können in alternativen Ausgestaltungen der Vorrichtung 10 durch ein Fördergewinde 24 (siehe Fig. 4) bzw. ein Rückfördergewinde auf den Wellen 15, 16 ersetzt werden, und Abzugsöffnungen 11 für flüchtige Stoffe können am jeweiligen Beginn des Fördergewindes 24 sitzen, siehe Fig. 4. Das Gehäuse 12 ist beheizt ausgeführt, z.B. durch eine Beheizung mittels Öl, Infrarotstrahler oder elektrischen Einzel-Heizelementen. Auch die Wellen 15, 16 können beheizt ausgeführt sein, für gewisse Anwendungsfälle auch gekühlt werden.

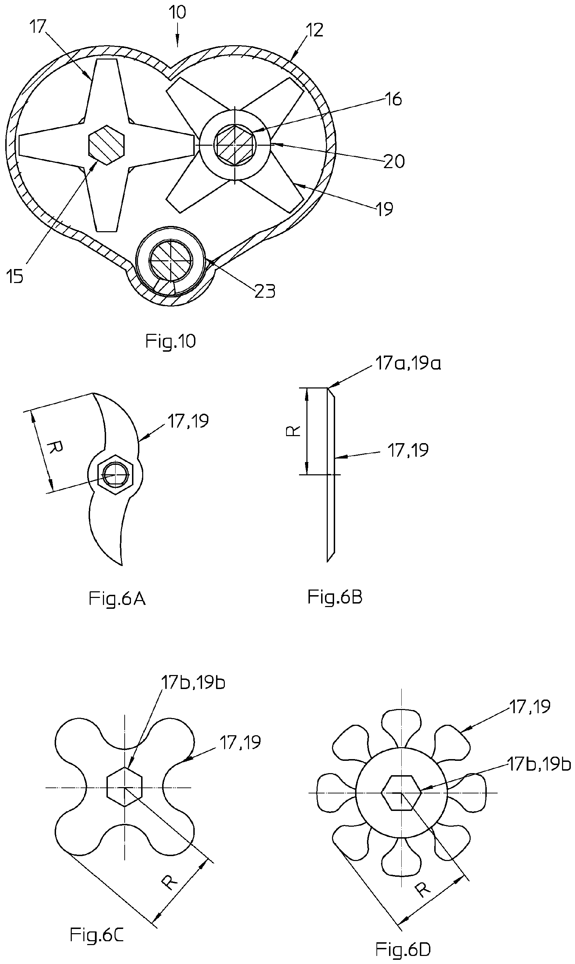

Die Mischelemente 17 der ersten Welle 15 sind axial so gegen die Mischelemente 19 der zweiten Welle 16 versetzt, dass die Mischelemente 17 der ersten Welle 15 Zwischenräumen 22, die zwischen den voneinander axial beabstandeten Mischelementen 19 der zweiten Welle 16 gebildet sind, gegenüberstehen und die Mischelemente 19 der zweiten Welle 16 axial so gegen die Mischelemente 17 der ersten Welle 15 versetzt sind, dass die Mischelemente 19 der zweiten Welle 16 Zwischenräumen 21, die zwischen den voneinander axial beabstandeten Mischelementen 17 der ersten Welle 15 gebildet sind, gegenüberstehen. Der Abstand A der ersten und der zweiten Welle 15, 16 voneinander sowie die größten radialen Längen R (siehe Fig. 6A bis 6D) der Mischelemente 17, 19 sind so dimensioniert, dass die Mischelemente 17, 19 in die ihnen gegenüberliegenden Zwischenräume 22, 21 eingreifen. In diesem Ausführungsbeispiel der erfindungsgemäßen Vorrichtung 10 sind die erste und die zweite Welle 15, 16 parallel zueinander ausgerichtet. Sie könnten aber auch schräg zueinander stehen, wenn die Mischelemente 17 der ersten Welle 15 und/oder die Mischelemente 19 der zweiten Welle 16 unterschiedlich große radiale Längen R aufweisen.

Wie in Fig. 5 dargestellt, sind die axialen Dicken D der Mischelemente 17, 19 so dimensioniert, dass sie beim Eingriff in die Zwischenräume 22, 21 mit den die Zwischenräume 22, 21 definierenden Mischelementen 19, 17 einen Spalt S mit einer Breite zwischen 0,5 und 5 mm bilden. Diese Dimensionierung stellt einerseits sicher, dass auf den Mischelementen 17, 19 anhaftender Kunststoff verlässlich abgeschert wird, und erlaubt andererseits gewisse Fertigungstoleranzen.

Zur Bildung der Zwischenräume 21 zwischen den benachbarten Mischelementen 17 der ersten Welle 15 sind Abstandshalter 18 vorgesehen, die eine kleinere radiale Ausdehnung haben als die Mischelemente 17. In gleicher Weise sind zur Bildung der Zwischenräume 22 zwischen den benachbarten Mischelementen 19 der zweiten Welle 16 Abstandshalter 20 vorgesehen, die eine kleinere radiale Ausdehnung haben als die Mischelemente 18. In der dargestellten Ausführungsform der Vorrichtung 10 sind die Abstandshalter 18, 20 als auf die jeweilige Welle 15, 16 aufschiebbare Scheiben ausgebildet. Die Abstandshalter 18, 20 erfüllen auch die Funktion von Mischelementen. Damit sichergestellt ist, dass sich die Abstandhalter 18, 20 mit ihrer jeweiligen Welle 15, 16 mitdrehen, ist eine formschlüssige Verbindung realisiert, indem die Abstandshalter 18, 20 mit einem nicht-kreisförmigen Mittelloch, z.B. einem Loch mit polygonalem Querschnitt versehen sind, und die Wellen 15, 16 mit gegengleichen Querschnitten ausgebildet sind. Zur Herstellung von formschlüssigen Verbindungen zwischen den Wellen 15, 16 und den Mischelementen 17, 19 können auch die Mischelemente 17, 19 mit Mittellöchern 17b, 19b mit entsprechendem nicht-kreisförmigen Querschnitt versehen werden, wie in Fig. 6C und Fig. 6D ersichtlich ist. Bei einer solchen Ausgestaltung ist es möglich, die Vorrichtung 10 zusammenzubauen, indem auf die Wellen 15, 16 abwechselnd Mischelemente 17, 19 und Abstandshalter 18, 20 aufgesteckt werden. Mit dieser Ausführung können auch einzelne Mischelemente 17, 19 bzw. Abstandshalter 18, 20 ausgetauscht werden.

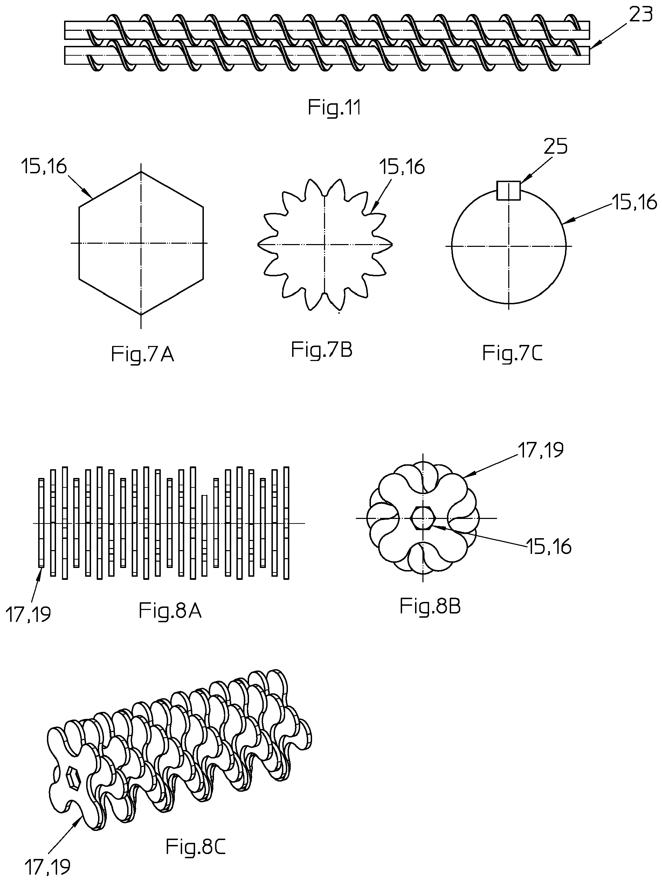

Die Figuren 6A bis 6D zeigen verschiedene Ausführungsformen der Mischelemente 17, 19. In Fig. 6A ist ein zweiflügelig ausgebildetes Mischelement 17, 19 dargestellt. Fig. 6B zeigt eine Anfasung 17a, 19a des Mischelements 17, 19, wobei das Mischelement 17, 19 kreisscheibenförmig oder mit Flügeln ausgebildet sein kann. In Fig. 6A ist ein vierflügelig ausgebildetes Mischelement 17, 19 dargestellt. In Fig. 6D ist ein achtflügelig ausgebildetes Mischelement 17, 19 dargestellt. In den Figuren 6A bis 6D ist die jeweilige größte radiale Länge R der Mischelemente 17, 19 eingezeichnet. Die Figuren 6C und 6D zeigen die sechseckigen Mittellöcher 17b, 19b. Die in Fig. 6B dargestellte Anfasung 17a, 19a am Umfang der Mischelemente 17, 19 dient dazu, den Transport der Kunststoffschmelze von der Schmelzeeintrittsöffnung 13 zur Schmelzeaustrittsöffnung 14 zu unterstützen und damit eine definierte Verweilzeit sicherzustellen. Die Anfasungen 17a, 19a üben auf die viskose Kunststoffschmelze einen leichten Propellereffekt und damit Vortrieb aus. Auch die Ausbildung der Mischelemente 17, 19 als Flügel und optional eine versetzte Anordnung der als Flügel ausgebildeten Mischelemente 17, 19 oder ein Verdrehen der Flügel unterstützt eine Strömung der Kunststoffeschmelze zwischen der Schmelzeeintrittsöffnung 13 und der Schmelzeaustrittsöffnung 14, speziell bei dickflüssigen Kunststoffschmelzen. Die Figuren 8A, 8B, 8C zeigen eine Anordnung der als Flügel ausgebildeten Mischelemente 17, 19 auf der Welle 15, 16 in Form einer Schraubenlinie, indem die Mischelemente 17, 19 im Winkel zueinander versetzt sind.

Die Figuren 7A bis 7C zeigen verschiedene Querschnittsformen der in der erfindungsgemäßen Vorrichtung 10 verwendeten Wellen 15, 16 zur formschlüssigen Verbindung mit den gegengleich ausgeführten Mittellöchern 17b, 19b der Mischelemente 17, 19 bzw. den Mittellöchern der Abstandshalter 18, 20. Fig. 7A zeigt die bereits erwähnte sechseckige Querschnittsform der Welle 15, 16. Fig. 7B zeigt eine Keilwellenform der Welle 15, 16. Fig. 7C zeigt eine kreisrunde Welle 15, 16 mit einer Längsnut und einer darin eingesetzten Passfeder 25 zur Herstellung einer formschlüssigen Verbindung.

Die größten radialen Längen R der Mischelemente 17, 19 sind so bemessen sind, dass sie beim Eingriff in die Zwischenräume 22, 21 einen Abstand T von 0,5 bis 5 mm zur Manteloberfläche der ihnen gegenüberliegenden Welle 16, 15 bzw., wie in Fig. 5 dargestellt, zur Mantel Oberfläche der auf der gegenüberliegenden Welle 16, 15 angeordneten Abstandshalter 20, 18 aufweisen. Dies stellt sicher, dass auch auf den Oberflächen der Abstandshalter 18, 20 bzw. der Wellen 15, 16 anhaftende Kunststoffschmelze von den Mischelementen 19, 17 abgeschert werden.

Die Motoren M1, M2 sind so ansteuerbar, dass sie die erste und die zweite Welle 15, 16 mit unterschiedlichen Geschwindigkeiten gleichsinnig oder gegensinnig drehen können. Bevorzugt sind die Motoren M1, M2 auch in ihrer Drehrichtung umschaltbar, wodurch auch die erste und die zweite Welle 15, 16 in ihrer Drehrichtung umschaltbar sind. Es ist ein Betrieb der Vorrichtung 10 realisierbar, bei dem zunächst nur eine der beiden Wellen 15, 16 in ihrer Drehrichtung umgekehrt wird, und später dann die zweite Welle 16, 15 in ihrer Drehrichtung umgekehrt wird. Dies kann periodisch wiederholt werden.

Weiters ist bei der vorliegenden Vorrichtung 10 vorgesehen, dass die erste oder/und die zweite Welle 15, 16 axial, d.h. in ihrer Drehachsenrichtung, verschiebbar sind/ist, wobei vorzugsweise die Verschiebung pulsierend erfolgt. Eine solche axiale Verschiebung der Wellen 15, 16 kann beispielsweise durch Kulissenführung, Nockenantriebe oder hydraulische/pneumatische Zylinder realisiert werden. Eine gemeinsame axiale Verschiebung der beiden Wellen 15, 16 dient dazu, um die stirnseitigen Innenwände des Gehäuses 12 abzuschaben. Eine geringe axiale Verschiebung einer Welle 15, 16 bzw. eine gegengleiche Verschiebung der beiden Wellen 15, 16 ist vorgesehen, um die Spaltbreiten in den Zwischenräumen 21, 22 zu verändern.

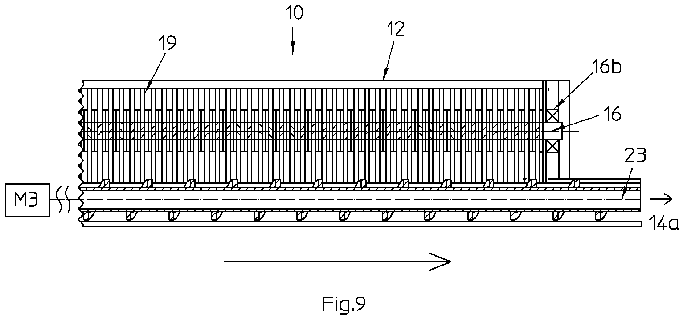

In Fig. 9 und 10 ist eine weitere Ausführungsform der erfindungsgemäßen Vorrichtung 10 zur Behandlung von Schmelzen thermoplastischer Kunststoffe dargestellt. Diese Ausführungsform unterscheidet sich von der in Fig. 2 und 3 dargestellten Ausführungsform im Wesentlichen nur dadurch, dass im Bodenbereich im Inneren des Gehäuses 12 eine Förderschnecke 23 zwischen den Mischelementen 17 der ersten Welle 15 und den Mischelementen 19 der zweiten Welle 16 ausgebildet ist, damit auch die im Bodenbereich im Inneren des Gehäuses 12 angesammelte Kunststoffschmelze in einer definierten Verweilzeit aus dem Gehäuse 12 ausgetragen wird. In Fig. 9 und Fig. 10 ist die Förderschnecke 23 als Einzelschnecke dargestellt. Alternativ dazu kann auch die in Fig. 11 dargestellte Doppelschnecke verwendet werden. Diese Förderschnecke kann durch einen dritten Motor M3 angetrieben werden und kann auch zum Austrag 14a der Kunststoffschmelze aus dem Reaktor 10 dienen.

Mit der vorgestellten Vorrichtung 10 ist ein Verfahren zur Wärmebehandlung, vorzugsweise zur Dekontaminierung, von Schmelzen von thermoplastischen Kunststoffen durchführbar, das sich durch Verweilenlassen der Schmelze in der Wärmebehandlungsvorrichtung für eine Wärmebehandlungszeit von 1-120 min bei einer Wärmebehandlungstemperatur über der Schmelzetemperatur des zu behandelnden Kunststoffs und optional einem Vakuum zwischen 0,1 und 900 mbar, vorzugsweise zwischen 1 und 10 mbar. Die Wärmebehandlung kann in Form einer Melt Phase Polykondensation durchgeführt werden, wobei Polykondensate, wie PET, PA oder PC behandelt werden, und wobei mittels Einstellung der Behandlungstemperatur, des Drucks und der Verweilzeit bzw. deren Verläufen die Viskosität des Polykondensats geändert wird.
Weiters kann die Wärmebehandlung so erfolgen, dass die Kunststoffschmelze kontinuierlich nach dem first in, first out Prinzip von der Schmelzeeintrittsöffnung 13 zur Schmelzeaustrittsöffnung 14 transportiert wird. Obwohl in den Zeichnungen nicht dargestellt, kann das Gehäuse 12 über zusätzliche Einlässe verfügen, durch die Kunststoffschmelzen mit anderen Eigenschaften und/oder aus anderen Quellen in das Innere des Gehäuses 12 zugeführt wird. Im Betrieb wird das Gehäuse 12 nicht ganz mit Kunststoffschmelze gefüllt, kann aber zu mehr als der Hälfte mit Kunststoffschmelze gefüllt werden.

## Patentansprüche

1. Vorrichtung (10) zur Behandlung von Schmelzen thermoplastischer Kunststoffe, mit einem Gehäuse (12) mit einer Schmelzeeintrittsöffnung (13), einer Schmelzeaustrittsöffnung (14) und einer Abzugsöffnung (11) für flüchtige Bestandteile der Kunststoffschmelze, **gekennzeichnet durch**
zumindest eine erste drehbar angetriebene Welle (15) und eine zweite drehbar angetriebene Welle (16), wobei auf jeder Welle (15, 16) eine Vielzahl von Mischelementen (17, 19) axial voneinander beabstandet sich mit der Welle (15, 16) drehend angeordnet sind, wobei die Mischelemente (17) der ersten Welle (15) axial so gegen die Mischelemente (19) der zweiten Welle (16) versetzt sind, dass die Mischelemente (17) der ersten Welle Zwischenräumen (22), die zwischen den voneinander axial beabstandeten Mischelementen (19) der zweiten Welle (16) gebildet sind, gegenüberstehen und die Mischelemente (19) der zweiten Welle (16) axial so gegen die Mischelemente (17) der ersten Welle (15) versetzt sind, dass die Mischelemente (19) der zweiten Welle (16) Zwischenräumen (21), die zwischen den voneinander axial beabstandeten Mischelementen (17) der ersten Welle (15) gebildet sind, gegenüberstehen, wobei der Abstand (A) der ersten und der zweiten Welle (15, 16) voneinander sowie die größten radialen Längen (R) der Mischelemente (17, 19) so dimensioniert sind, dass die Mischelemente (17, 19) in die ihnen gegenüberliegenden Zwischenräume (22, 21) eingreifen.

2. Vorrichtung nach Anspruch 1, **dadurch gekennzeichnet, dass** die axialen Dicken (D) der Mischelemente (17, 19) so dimensioniert sind, dass sie beim Eingriff in die Zwischenräume (22, 21) mit den diese Zwischenräume definierenden Mischelementen (19, 17) einen Spalt (S) mit einer Breite zwischen 0,5 und 5 mm bilden.

3. Vorrichtung nach Anspruch 1 oder 2, **dadurch gekennzeichnet, dass** die axialen Abstände (G) der Mischelemente (17, 19) durch Anordnung von Abstandshaltern (18, 20) zwischen den Mischelementen (17, 19) definiert sind, wobei die Abstandshalter (18, 20) eine kleinere radiale Ausdehnung haben als die Mischelemente (17, 19).

4. Vorrichtung nach Anspruch 3, **dadurch gekennzeichnet, dass** die Abstandshalter (18, 20) auf die jeweilige Welle (15, 16) aufschiebbare Scheiben sind.

5. Vorrichtung nach einem der vorhergehenden Ansprüche, **dadurch gekennzeichnet, dass** die größten radialen Längen (R) der Mischelemente (17, 19) so bemessen sind, dass sie beim Eingriff in die Zwischenräume (22, 21) einen Abstand von 0,5 bis 5 mm zur Manteloberfläche der ihnen gegenüberliegenden Welle (16, 15) oder zur Manteloberfläche von gegebenenfalls auf der gegenüberliegenden Welle angeordneten Abstandshaltern (20, 18) aufweisen.

6. Vorrichtung nach einem der vorhergehenden Ansprüche, **dadurch gekennzeichnet, dass** die erste und die zweite Welle (15, 16) parallel zueinander ausgerichtet sind.

7. Vorrichtung nach einem der vorhergehenden Ansprüche, dass die Mischelemente (17, 19) als Flügelelemente mit zumindest zwei Flügeln oder als Scheiben ausgebildet sind.

8. Vorrichtung nach einem der vorhergehenden Ansprüche, **dadurch gekennzeichnet, dass** die Mischelemente (17, 19) an ihren Umfängen mit Anfasungen (17a, 19a) versehen sind.

9. Vorrichtung nach einem der vorhergehenden Ansprüche, **dadurch gekennzeichnet, dass** die erste und die zweite Welle (15, 16) mit unterschiedlichen Geschwindigkeiten gleichsinnig oder gegensinnig drehbar sind.

10. Vorrichtung nach einem der vorhergehenden Ansprüche, **dadurch gekennzeichnet, dass** die erste und/oder die zweite Welle (15, 16) in ihrer Drehrichtung umschaltbar sind/ist.

11. Vorrichtung nach einem der vorhergehenden Ansprüche, **dadurch gekennzeichnet, dass** die erste oder/und die zweite Welle (15, 16) axial verschiebbar sind/ist, wobei vorzugsweise die Verschiebung pulsierend erfolgt.

12. Vorrichtung nach einem der vorhergehenden Ansprüche, **dadurch gekennzeichnet, dass** im unterem Teil im Inneren des Gehäuses (12) eine Förderschnecke (23) (16) ausgebildet ist.

13. Vorrichtung nach einem der vorhergehenden Ansprüche, **dadurch gekennzeichnet, dass** das Gehäuse (12) und/oder zumindest eine der Wellen (15, 16) temperierbar sind.

14. Verfahren zur Wärmebehandlung, vorzugsweise zur Dekontaminierung, von Schmelzen von thermoplastischen Kunststoffen, **gekennzeichnet durch** das Bereitstellen einer Wärmebehandlungsvorrichtung (10) mit einem Gehäuse (12) mit einer Schmelzeeintrittsöffnung (13), einer Schmelzeaustrittsöffnung (14) und einer mit einem Vakuum verbindbaren Abzugsöffnung (11) für flüchtige Bestandteile der Kunststoffschmelze nach einem der Ansprüche 1 bis 13, das Einbringen der Schmelze in die Wärmebehandlungsvorrichtung (10) und das Verweilenlassen der Schmelze in der Wärmebehandlungsvorrichtung (10) für eine Wärmebehandlungszeit von 1-120 min bei einer Wärmebehandlungstemperatur über der Schmelzetemperatur des zu behandelnden Kunststoffs.

15. Verfahren zur Wärmebehandlung nach Anspruch 14, **gekennzeichnet durch** Verweilenlassen der Schmelze in der Wärmebehandlungsvorrichtung (10) unter einem Vakuum zwischen 0,1 und 900 mbar, vorzugsweise zwischen 1 und 10 mbar.

16. Verfahren zur Wärmebehandlung nach Anspruch 15, **dadurch gekennzeichnet, dass** in das Gehäuse (12) zusätzlich ein Gas- oder Luftstrom eingebracht wird.

17. Verfahren zur Wärmebehandlung von Schmelzen von thermoplastischen Kunststoffen in einer Wärmebehandlungsvorrichtung (10) mit einem Gehäuse (12) mit einer Schmelzeeintrittsöffnung (13) und einer Schmelzeaustrittsöffnung (14), **gekennzeichnet durch** Verweilenlassen der Schmelze in der Wärmebehandlungsvorrichtung (10) für eine Wärmebehandlungszeit von 1-120 min bei einer Wärmebehandlungstemperatur über der Schmelzetemperatur des zu behandelnden Kunststoffs und einem Gasüberdruck von 1 bis 100 bar im Inneren des Gehäuses (12).

18. Verfahren zur Wärmebehandlung nach einem der Ansprüche 14 bis 17, **dadurch gekennzeichnet, dass** die Wärmebehandlung die Polykondensation von Polykondensaten, wie PET, PA oder PC umfasst, wobei mittels Einstellung der Behandlungstemperatur, des Drucks und der Verweilzeit bzw. deren Verläufen die Viskosität des Polykondensats geändert wird.
